# EUROPEAN PATENT SPECIFICATION

(11) **EP 0 411 712 B1**
(45) Date of publication and mention of the grant of the patent: **02.10.1996**
(21) Application number: 90202092.4
(22) Date of filing: 31.07.1990
(51) Int. Cl.: H04L 9/06, G06F 12/14

(54) **Method and device for enciphering data to be transferred and for deciphering the enciphered data, and a computer system comprising such a device**
Verfahren und Einrichtung zur Verschlüsselung von Übertragungsdaten und zur Entschlüsselung verschlüsselter Daten und Computersystem, das eine solche Einrichtung enthält
Procédé et dispositif de cryptage pour données à transmettre et de décryptage pour données chiffrées, et système d'ordinateur comportant un tel dispositif

(30) Priority: 01.08.1989 NL 8901983
(43) Date of publication of application: 06.02.1991
(73) Proprietor: TULIP COMPUTERS INTERNATIONAL B.V., NL-5231 DC 's-Hertogenbosch (NL)
(72) Inventor: van Rumpt, Herman Wouter, NL-5235 HC 's-Hertogenbosch (NL); Kwan, Benny Ching Tak, NL-5624 HX Eindhoven (NL)
(74) Representative: Smulders, Theodorus A.H.J., Ir.

(56) References cited:
- EP-A- 0 114 368
- US-A- 4 278 837
- US-A- 4 780 905
- G.E.C. JOURNAL OF RESEARCH, vol. 2, no. 1, 1984, pages 30-36, Rugby, GB; A.M. JACKSON et al.: "Project universe encryption experiment"

## Description

The invention relates to a method and device for enciphering data according to the preamble of claim 1 and 13 respectively as well as a method and a device for deciphering the enciphered data according to the preamble of claim 7 and 17 respectively.

Such methods and devices are disclosed in G.E.C Journal of Research, vol.2, no.1, 1984, pp. 30-36.

Storing data in a computer memory, such as the hard disk unit of a personal computer, involves a serious risk of unauthorized persons reading out the data stored in the memory or even misappropriating the storage disk to be able to read out the data store without being disturbed. Such risks are the greater according as the use of personal computers increases and more confidential information is stored in their memories. There are software packages which aim to solve the problem described above by first enciphering the data to be written in a memory. A number of these known programs have the drawback that the user must specifically switch them on which may lead to errors, for instance when encipherment is not applied when it should be. A further even greater drawback is the fact that all existing software is slow so that encipherment may lead to undesirable waiting times for the user, which in turn may be a reason for the user to omit encipherment.

U.S. patent specification 4,780,905 describes a system for enciphering data to be written in a memory of a personal computer system, in which the data are invariably enciphered. For encipherment a key is used which is a small part of a very long, in particular 64 K bits, key. The key portion to be chosen for a specific encipherment can be chosen depending on the specific location where the data are written in the memory. However, this known system, too, causes a considerable delay in the speed of reading from and writing into the memory.

The object of the invention is to overcome this drawback of the existing software and to that end provides a method and a device of the type described hereinabove, for encyphering and decyphering characterized by the features of the claims 1, 7, 13 and 17 respectively.

Product encipherment is a principle of encipherment known from cryptography and for a description of its principle reference can be made to "Kryptographie" by W. Fumy and H.P. Riesz; R. Oldenbourg Verlag München Wien 1988, in particular Chapter 4.1. The principle of product enciphering is used inter alia in DES (Data Encryption Standard), an encryption algorithm for data communication in which the data supply to be enciphered is divided into blocks of 64 bits, which are enciphered by means of a 56-bits key. In DES, however, the blocks are enciphered one by one, i.e. periodically the user must wait until at the input of the product cipher circuit a block to be encoded is available, which makes DES relatively slow.

The principle of the DES algorithm for use in a local area network (LAN) is described in for instance the above mentioned GEC Journal of Research, vol. 2, no. 1, 1984 (Rugby GB) in an article by A.M. Jackson et al.: "Project Universe Encryption Experiment", pp. 30-36. This article describes the various operational modes of DES, in which, however, the principle of encrypting serial blocks of data is invariably maintained.

The invention is based on the insight that the principles of encryption known from cryptography, and more particularly product enciphering, can be used advantageously in the encryption of data to be written in a memory, when the number of inputs of the (product) cipher circuit equals the width of the data word to be enciphered which is supplied via the data bus. In fact, the product cipher circuit then functions as a delay line included between the data bus supplying the data words and the memory, so that in principle the data words can be processed at the same speed as in the rest of the computer system and the enciphering process does not cause any delay that is noticeable to the user.

For use in the method according to the invention the product cipher circuit may for instance comprise alternately eleven linear permutation boxes, each with a word width of 16 bits, in which the inputs of the first permutation box and the outputs of the last permutation box form the inputs and the outputs, respectively, of the product cipher circuit, and ten groups of four non-linear substitution boxes each, so-called S-boxes, each having a word width of 4 bits. Each permutation box may for instance have four permutations and can then be controlled with a 2-bits key. Each S-box may for instance have two substitution alternatives and can then be controlled with a 1-bit key. In this example the control of the entire product cipher circuit would then require a key of m=62 bits. It will be clear a person skilled in the art has a great number of options in choosing the number of permutation boxes, the number of substitution boxes, their sequence and the number of permutations and substitutions, and that the example given is only one of a great number of possible variants. The permutation boxes and the S-boxes are implemented in such a way that the product cipher circuit is suitable both for enciphering and for deciphering, and for decipherment the same 62-bits key is used, but with each of the key bits being inverted.

When the method according to the invention is used, with the same key one original data word is invariably enciphered into the same enciphered (crypto) word. This principle is known under the name of electronic code book and may have the disadvantage that when a number of original data words and their corresponding crypto words are known, for instance because it concerns publicly known control commands occurring on any memory disk, deciphering the encryption algorithm and finding the key used is facilitated. Obviously this is undesirable.

According to the invention each n-bits data word to be enciphered is logically combined with an n-bits coding word before it is supplied to the cipher circuit, the coding word for the greater part of the data words being derived from the n-bits crypto word at the output of the cipher circuit.

The logic combination is preferably a modulo 2 addition and the word derived from the n-bits crypto word at the output of the cipher circuit is preferably that word itself.

For the initial coding word, the n-bits coding word to be used at the outset of an enciphering process when at the output of the cipher circuit no crypto word is available yet, an n-bits coding word can be used which is entered by the user via the keyboard. When the memory is a hard disk unit, however, it is preferable to make use of the specific sector division of the data on such a disk. Each sector forms a part of one of the concentric storage tracks on the disk. The transfer of data to and from the storage disk is effected sector by sector or by multiples of sectors, one sector comprising for instance 256 data words of 16 bits. According to a preferred embodiment of the invention, therefore, the initial n-bits coding word is formed from a p-bits coding word to be entered by the user once for each cycle of use and a sector-specific r-bits coding word generated by the computer for each new sector to be written. This r-bits coding word is directly related to the sector in which the data to be enciphered are to be written and is determined by a number of or all the following parameters: the number of the read/write head in a disk unit with a plurality of hard disks, and hence a plurality of read/write heads, the side of the disk, the number of the track on that side and the number of the sector on that track. The initial n-bits coding word can then be formed by a logic combination of the p-bits and the r-bits coding word. By the method described hereinabove it is accomplished that one and the same data word, when enciphered, leads to different crypto words in different sectors. Owing to the predetermined combination of the fixed p-bits user's coding word and the r-bits sector-specific coding word uniformly determined by the computer on the basis of the sector data, the initial coding word for deciphering the crypto words in each sector can be uniformly determined so that decipherment will not present any problems, provided, of course, the correct key and the correct p-bits coding word are entered by the user. For decipherment either the initial coding word or the crypto word to be deciphered is combined through a modulo 2 addition with the data word at the output of the cipher circuit so as to obtain the original data word.

Although the m-bits key can in principle be supplied directly to the cipher circuit, in accordance with a further embodiment of the invention, for further improving the encipherment of the data words to be registered, r bits, with r ≤ m, of this key are logically comtined with the computer-generated r-bits coding word related directly to a sector. This logic combination is preferably a modulo 2 addition. The r-bits key part obtained by this modulo 2 addition is then supplemented with the m-r bits of the original key so as to obtain an m-bits key again. In this w`ay a different encryption key is obtained for each sector, which further prevents unauthorized decipherment.

The invention further relates to a computer system comprising a central processor and a hard storage disk unit, wherein the device according to the invention is included in the data bus which links the central processor and the storage disk unit.

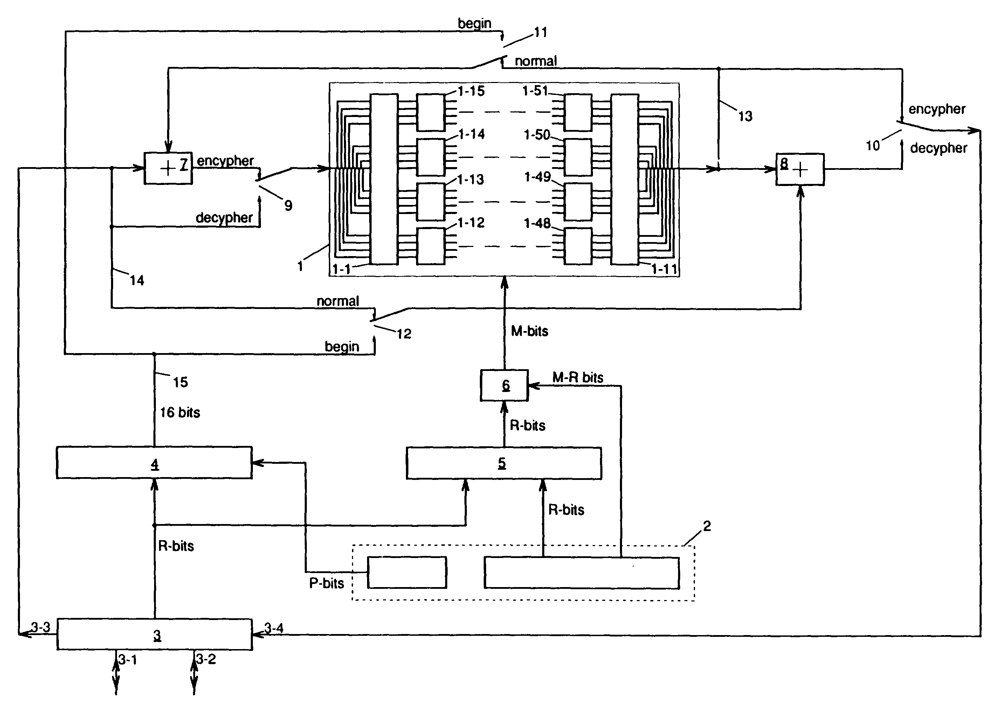

The invention will now be further explained with reference to the accompanying drawing showing a block diagram of one embodiment of a device according to the invention.

The device according to the embodiment is designed to encipher data words of a width of 16 bits, but can be readily made suitable for data words of a different word width after a number of adaptations which are obvious to a person skilled in the art.

The device comprises a product cipher circuit 1 comprising eleven permutation boxes, 1-1 through 1-11, each having sixteen inputs and sixteen outputs, the sixteen inputs of the permutation box 1-1 forming the inputs of the product cipher circuit for receiving the data word to be enciphered or deciphered, and the sixteen outputs of the permutation box 1-11 forming the outputs of the product cipher circuit for generating the enciphered or deciphered data word. The product cipher circuit 1 further comprises forty non-linear substitution boxes, 1-12 through 1-51, each having four inputs and four outputs. The forty substitution boxes, known as S-boxes, are divided into ten groups of four S-boxes each, one such group being arranged in the circuit 1 between each pair of permutation boxes, with the 4x4 inputs of one group of S-boxes being linked to the sixteen outputs of the preceding permutation box and the 4x4 outputs of a group of S-boxes being linked to the sixteen inputs of the next permutation box, so that data words of 16-bits width are alternately permuted and substituted. The data words supplied to the input of the product cipher circuit 1 are continuously enciphered or deciphered, the circuit 1 in fact functioning as a delay line whose delay is determined by the switching time of the various permutation and substitution boxes. The permutation boxes 1-1 through 1-11 each have four different permutations, so that each permutation box can be controlled with a key word of two bits. Each S-box 1-12 through 1-51 has two different substitution alternatives, so that each S-box can be controlled with a key word of one bit. For setting a specific encipherment by the product cipher circuit 1, therefore, a key is required of (11 x 2) + (40 x 1) = 62 bits. This key is supplied from a circuit 6 to be further discussed hereinafter and parts of two bits and of one bit of this key are supplied to control inputs (not shown for the sake of clarity) of the respective boxes 1-1 through 1-11 and 1-12 through 1-51.

The apparatus according to the invention comprises an input device 2, such as a keyboard or a credit card reader, for entering key words. An interface circuit 3 forms the link between on the one hand the computer with the storage and on the other the cipher device according to the invention. To that end the interface circuit comprises a bidirectional data bus 3-1 which is linked to the storage in the form of for instance a hard disk unit, and a bidirectional data bus 3-2 for maintaining the link with other components of the computer and for transferring the data to be read from or written in the storage. The data words to be enciphered or deciphered are supplied to the product cipher circuit 1 via a data bus 3-3, and from this circuit the enciphered or deciphered data words are supplied to the interface circuit 3 again via a data bus 3-4.

The device further comprises a pair of two-way switches 9 and 10 which in a first position, shown in the drawing, ensure that the device according to the invention operates as an enciphering circuit and in the second position ensure that it operates as a deciphering circuit.

As explained hereinabove, in a number of cases it may be a disadvantage that identical data words are enciphered with one and the same key to one and the same crypto word. To offer a solution to this problem modulo 2 adding circuits 7 and 8 are provided for encipherment and decipherment, respectively. When being enciphered, the enciphered data word, at the output of the product cipher circuit 1 is fed back via a bus 13 to a first input of the modulo 2 adder 7, whose second input receives the data word to be enciphered. In this way due to the feedback from the output of the circuit 1, the same data word supplied at the second input of the modulo 2 adder is converted into a different crypto word each time.

In the deciphering process the data word, at the output of the product cipher circuit 1, is supplied to a first input of the modulo 2 adder 8, whose second input receives the data word to be deciphered via a bus 14. At the output of the modulo 2 adder the correct deciphered data word is then available again.

To ensure reliable decipherment it is naturally necessary that the data words to be deciphered are supplied in the same sequential order as in which they were enciphered. To this end it is advantageous to use the fact that data are recorded sectorwise on a hard disk, with each sector comprising for instance 512 bytes, so 256 data words, and that writing and reading out data words is invariably done by one or more sectors at the same time. Therefore encipherment, by means of feedback from the output of the product cipher circuit 1 and the modulo 2 addition, is effected sectorwise, so that the sequential order of the enciphered data words is fixed in the deciphering process. To that end a pair of two-way switches 11 and 12 are provided, shown in the drawing in the position which they are in during the enciphering and deciphering process of all data words of a sector, except for the first data word thereof. When the first data word of each new sector is enciphered, the feedback from the output of the product cipher circuit 1 via bus 13 to the first input of the modulo 2 adder 7 is interrupted by means of the switch 11 and via a data bus 15 an initial coding word of 16 bits is supplied to this input. In the same way, in the deciphering process the initial coding word is supplied to the first input of the modulo 2 adder 8 by means of the switch 12.

The initial coding word comprises specific data for each sector and is determined by a number or all of the following parameters: the number of the read/write head in a disk unit with a plurality of hard disks, and hence a plurality of read/write heads, the side of the disk, the number of the track on that side and the number of the sector on that track. A sector-specific coding word consisting of r bits is generated by the computer and is supplied to a circuit 4 where it is combined with a p-bits key to be entered by the user for instance via a keyboard, to form the initial coding word of 16 bits. Making the initial coding word for each sector dependent on specific data unique for each sector prevents identical data words in different sectors from being enciphered to one and the same crypto word, which improves the quality of encipherment.

Finally, the device according to the invention preferably has the property that the key supplied to the product cipher circuit 1 is also different for each sector of the hard disk. To that end, from an m-bits key entered by the user an r-bits part is supplied to a first input of a modulo 2 adder 5, to the second input of which the computer-generated sector-specific r-bits coding word is supplied. In a circuit 6 the r-bits word formed by the modulo 2 adder 5 is supplemented again with the remaining m-r bits of the key, which were not supplied to the modulo 2 adder 5, so as to form a complete key of m bits again. The fact that according to this variant of the invention also the m-bits key for circuit 1 is different for each sector further prevents unauthorized decipherment.

It is observed that the basic principle of the invention, the encipherment of n-bits data words by means of a product cipher circuit, can not only be applied to the storage and reading out of data in various types of storage devices, but also in data communication in general and that the use of a sector-specific coding word in enciphering data words and/or modifying the m-bits key can be applied in all those cases where storage devices are used in which the data are stored in predetermined fixed frames and where one or more complete frames are written or read out at a time. Accordingly, the use of a sector-specific coding word is not limited to the use in the product cipher circuit according to the embodiment, but it can also be used in other ciphering circuits in which consecutive, n-bits data words are enciphered.

## Claims

1. A method of enciphering n-bit data words, comprising the steps of:
logically combining (7) consecutive ones of a plurality of n-bit data words to be enciphered with consecutive ones of a plurality of n-bit coding words so as to yield consecutive ones of resulting n-bit words;
supplying consecutive n-bit words to a product cipher circuit (1) ;
modifying, in said product cipher circuit (1) and under the control of an m-bit key, each one of said n-bit words a plurality of times to yield a corresponding enciphered data word, wherein n and m are both pre-defined integers; said modifying step comprising the step of successively and alternately permuting and substituting said each n-bit word under the control of said key, characterized in that the n-bit words are supplied to the product cipher circuit (1) along a bus of a width of n-bits, and that each of said n-bit words is modified a plurality of times in a corresponding plurality of consecutive modification stages of said product cipher circuit (1), each of said n-bit words being modified only once by each of said modification stages.

2. The method according to claim 1 further comprising the step of deriving the n-bit coding word from an n-bit enciphered word appearing at the output of the cipher circuit (1).

3. The method according to claim 2 wherein the n-bit coding word is identical to the enciphered word.

4. The method according to claim 1 in which the n-bit enciphered data words are stored sectorwise in a storage device and further comprising the step of forming the resulting n-bit coding word from an r-bit coding word, the r-bit coding word being generated for each new sector to be written and being directly related to the sector into which the resulting n-bit data words, which are to be enciphered, are to be written, where r is a pre-defined integer having a value less than or equal to m.

5. The method according to claim 4 further comprising the step of determining the r-bit coding word in response to at least one of the following parameters: a number of a read/write head in a disk unit having a plurality of hard disks, a side of a disk in the unit, a number of a track on the side and a number of the sector on the track.

6. The method according to claim 5 further comprising the step of forming the n-bit coding word by a logical combination (4) of the r-bit coding word and a p-bit coding word, said p-bit coding word being entered by a user (2).

7. A method of deciphering enciphered data comprising the steps of:
supplying consecutive n-bit enciphered words to a product cipher circuit (1).
modifying, in said product cipher circuit and under the control of an m-bit key, each one of said n-bit enciphered words a plurality of times to yield a corresponding one of a plurality of deciphered data words, wherein n and m are both pre-defined integers; said modifying step comprising the step of successively and alternately permuting and substituting said each n-bit enciphered word under the control of said key;
and said method further comprises the step of: logically combining (8) consecutive ones of the deciphered words with consecutive ones of a plurality of n-bit coding words so as to yield consecutive ones of n-bit deciphered data words, characterized in that the n-bit enciphered words are supplied to the product cipher circuit (1) along a bus of a width of n-bits, and that each of said n-bit enciphered words is modified a plurality of times in a corresponding plurality of consecutive modification stages of said product cipher circuit (1), each of said n-bit enciphered words being modified only once by each of said modification stages.

8. The method according to claim 7 further comprising the step of deriving the n-bit coding word from the n-bit enciphered data word appearing at the input of the cipher circuit (1).

9. The method according to claim 8 wherein the n-bit coding word is identical to the enciphered data word.

10. The method according to claim 7 in which the n-bit enciphered data words are stored sectorwise in a storage device and further comprising the step of forming the n-bit coding word from an r-bit coding word, the r-bit coding word being generated for each new sector to be written and being directly related to the sector into which the n-bit enciphered data words, which are to be deciphered, are to be read, where r is a pre-defined integer having a value less than or equal to m.

11. The method according to claim 10 further comprising the step of determining the r-bit coding word in response to at least one of the following parameters: a number of a read/write head in a disk unit having a plurality of hard disks, a side of a disk in the unit, a number of a track on the side and a number of the sector on the track.

12. The method according to claim 11 further comprising the step of forming the n-bit coding word by a logical combination (4) of the r-bit coding word and a p-bit coding word, said p-bit coding word being entered by a user (2).

13. Apparatus for enciphering n-bit data words comprising:
a product cipher circuit (1), having as input signals consecutive n-bit words and an m-bit key, producing a sequence of corresponding enciphered n-bit data words and having at least one permutation box with n inputs and n outputs and at least one substitution box with n inputs and n outputs, said permutation and substitution boxes being under the control of the m-bit key, wherein n and m are pre-defined integers; and a modulo 2 adder (7), a first input of which receives n-bit data words to be enciphered, a second input of which is linked to the output (13) of the product cipher circuit (1) and receives the n-bit enciphered data words and the output of the adder (7) being linked to and providing said n-bit words to an input of the product cipher circuit (1), wherein the adder (7) logically combines each one of the n-bit enciphered data words produced by said product cipher circuit (1) with a next successive one of said n-bit data words to be enciphered in order to yield a corresponding one of the n-bit words, characterized in that the product cipher circuit (1) comprises alternately one from a plurality of permutation boxes (1-1, ..., 1-11) with n inputs and n outputs and one from a plurality of substitution boxes (1-12, ..., 1-51) with n inputs and n outputs, each of said permutation and substitution boxes being under the control of a specific part of the m-bit key and each consecutive one of the n-bit words being permuted or substituted only once by each respective one of said permutation and substitution boxes.

14. The apparatus of claim 13 further comprising switching means (11) for linking at predetermined points in time the second input of the modulo 2 adder (7) to a circuit (4) which generates an n-bit initial coding word (15).

15. The apparatus of claim 14 further comprising means (4) for forming the n-bit initial coding word (15) from an r-bit coding word generated by a computer linked to the apparatus and a p-bit coding word entered by a user (2).

16. The apparatus in claim 15 further comprising a second modulo 2 adder (5) wherein a first input of said second adder (5) receives the r-bit coding word, a second input to said second adder (5) receives an r-bit portion of the m-bit key and an output of said second adder (5) is linked to a circuit (6) for combining an r-bit output of the second adder (5) and remaining m-r bits of the key to form the m-bit key to be supplied to the product cipher circuit (1).

17. Apparatus for deciphering n-bit enciphered data words comprising:
a product cipher circuit (1), having as input signals consecutive n-bit enciphered words and an m-bit key, for producing a sequence of corresponding deciphered n-bit data words and having at least one permutation box with n inputs and n outputs and at least one substitution box with n inputs and n outputs, said permutation and substitution boxes being under the control of the m-bit key, wherein n and m are pre-defined integers; and
a modulo 2 adder (8), a first input of which is linked to the output of the product cipher circuit (1) and receives the deciphered n-bit data words, a second input of which is linked to an input to the product cipher circuit (1) and receives the enciphered n-bit data words to be deciphered and an output of the adder (8) providing the deciphered n-bit enciphered data words, wherein the adder (8) logically combines each one of the deciphered n-bit words produced by said product cipher circuit (1) with a next successive one of said enciphered n-bit data words to be deciphered in order to yield a current corresponding one of the deciphered n-bit data words, characterized in that the product cipher circuit (1) comprises alternately one from a plurality of permutation boxes (1-1, ..., 1-11) with n inputs and n outputs and one from a plurality of substitution boxes (1-12, ..., 1-51) with n inputs and n outputs each of said permutation and substitution boxes being under the control of a specific part of the m-bit key and each consecutive one of the n-bit enciphered words being permuted or substituted only once by each respective one of said permutation and substitution boxes.

18. The apparatus in claim 17 further comprising switching means (12) for linking at predetermined points in time the second input of the modulo 2 adder (8) to a circuit (4) which generates an n-bit initial coding word (15).

19. The apparatus in claim 18 further comprising means (4) for forming the n-bit initial coding word from an r-bit coding word generated by a computer linked to the apparatus and a p-bit coding word entered by a user (2).

20. The apparatus in claim 19 further comprising a second modulo 2 adder (5) wherein a first input of said second adder (5) receives the r-bit coding word, a second input to said second adder (5) receives an r-bit portion of the m-bit key and an output of said second adder (5) is linked to a circuit (6) for combining an r-bit output of the second adder (5) and remaining m-r bits of the key to form the m-bit key to be supplied to the product cipher circuit (1).

21. A computer system comprising:
a central processor;
a hard disk storage unit;
a bus linking the central processor and the disk storage unit, characterised in that the bus includes an apparatus according to any of the claims 13-20.

## Patentansprüche

1. Verfahren zur Verschlüsselung von n-Bits Datenwörtern, wobei aufeinanderfolgende einer Anzahl zu verschlüsselnder n-Bits Datenwörter mit aufeinanderfolgenden einer Anzahl n-Bits Codierwörter logisch kombiniert werden (7), um aufeinanderfolgende von resultierenden n-Bits Wörtern zu liefern, aufeinanderfolgende n-Bits Wörter einem Produktverschlüsselkreis (1) zugeführt werden, in diesem Produktverschlüsselkreis (1) und unter Steuerung eines m-Bits Schlüssels jedes der n-Bits Wörter eine Anzahl Male modifiziert wird, um ein entsprechendes verschlüsseltes Datenwort zu liefern, wobei n und m beide vorbestimmte ganze Zahlen sind, in welchem Modifizierschritt jedes n-Bits Wort unter Steuerung des Schlüssels nacheinander und abwechselnd permutiert und substituiert wird, dadurch gekennzeichnet, daß die n-Bits Wörter dem Produktverschlüsselkreis (1) über einen Bus mit einer Breite von n-Bits zugeführt werden und daß jedes der n-Bits Wörter eine Anzahl Male in einer entsprechenden Anzahl aufeinanderfolgender Modifizierstufen des Produktverschlüsselkreises (1) modifiziert wird, wobei jedes der n-Bits Wörter nur einmal von jeder der Modifizierstufen modifiziert wird.

2. Verfahren nach Anspruch 1, wobei das n-Bits Codierwort von einem am Ausgang des Verschlüsselkreises (1) erscheinenden n-Bits versehlüsselten Wort abgeleitet wird.

3. Verfahren nach Anspruch 2, wobei das n-Bits Codierwort identisch mit dem verschlüsselten Wort ist.

4. Verfahren nach Anspruch 1, wobei die n-Bits verschlüsselten Datenwörter sektorweise in einem Speicher gespeichert werden und weiter das resultierende n-Bits Codierwort aus einem r-Bits Codierwort gebildet wird, welches r-Bits Codierwort für jeden neuen Sektor erzeugt wird, um geschrieben und direkt auf den Sektor bezogen zu werden, in den die zu verschlüsselnden resultierenden n-Bits Datenwörter zu schreiben sind, wobei r eine vorbestimmte ganze Zahl mit einem Wert unter oder gleich m ist.

5. Verfahren nach Anspruch 4, wobei das r-Bits Codierwort ansprechend auf mindestens einen der folgenden Parameter bestimmt wird: eine Nummer eines Lese/Schreibkopfes in einer Scheibeneinheit mit einer Anzahl harter Scheiben, eine Seite einer Scheibe in der Einheit, eine Nummer einer Spur auf der Seite und eine Nummer des Sektors auf der Spur.

6. Verfahren nach Anspruch 5, wobei das n-Bits Codierwort durch eine logische Kombination (4) des r-Bits Codierwortes und eines von einem Benutzer (2) einzugebenden p-Bits Codierwortes gebildet wird.

7. Verfahren zur Entschlüsselung verschlüsselter Daten, wobei aufeinanderfolgende n-Bits verschlüsselte Wörter einem Produktverschlüsselkreis (1) zugeführt werden, in diesem Produktverschlüsselkreis und unter Steuerung eines m-Bits Schlüssels jedes der n-Bits verschlüsselten Wörter eine Anzahl Male modifiziert wird, um ein entsprechendes einer Anzahl entschlüsselter Datenwörter zu liefern, wobei n und m beide vorbestimmte ganze Zahlen sind, in welchem Modifizierschritt jedes n-Bits verschlüsselte Wort unter Steuerung des Schlüssels nacheinander und abwechselnd permutiert und substituiert wird; und wobei aufeinanderfolgende einer Anzahl entschlüsselter Wörter mit aufeinanderfolgenden einer Anzahl n-Bits Codierwörter logisch kombiniert werden (8), um aufeinanderfolgende von n-Bits entschlüsselten Wörtern zu liefern, dadurch gekennzeichnet, daß die n-Bits verschlüsselten Wörter dem Produktverschlüsselkreis (1) über einen Bus mit einer Breite von n-Bits zugeführt werden und daß jedes der n-Bits verschlüsselten Wörter eine Anzahl Male in einer entsprechenden Anzahl aufeinanderfolgender Modifizierstufen des Produktverschlüsselkreises (1) modifiziert wird, wobei jedes der n-Bits verschlüsselten Wörter nur einmal von jeder der Modifizierstufen modifiziert wird.

8. Verfahren nach Anspruch 7, wobei das n-Bits Codierwort aus dem am Eingang des Verschlüsselkreises (1) erscheinenden n-Bits verschlüsselten Datenwort abgeleitet wird.

9. Verfahren nach Anspruch 8, wobei das n-Bits Codierwort identisch mit dem verschlüsselten Datenwort ist.

10. Verfahren nach Anspruch 7, wobei die n-Bits verschlüsselten Datenwörter sektorweise in einem Speicher gespeichert werden und das n-Bits Codierwort aus einem r-Bits Codierwort gebildet wird, welches r-Bits Codierwort für jeden neuen Sektor erzeugt wird, um geschrieben und direkt bezogen zu werden auf den Sektor, in den die zu entschlüsselnden n-Bits verschlüsselten Datenwörter zu lesen sind, wobei r eine vorbestimmte ganze Zahl mit einem Wert unter oder gleich m ist.

11. Verfahren nach Anspruch 10, wobei das r-Bits Codierwort ansprechend auf mindestens einen der folgenden Parameter bestimmt wird: eine Nummer eines Lese/Schreibkopfes in einer Scheibeneinheit mit einer Anzahl harter Scheiben, eine Seite einer Scheibe in der Einheit, eine Nummer einer Spur auf der Seite und eine Nummer des Sektors auf der Spur.

12. Verfahren nach Anspruch 11, wobei das n-Bits Codierwort durch eine logische Kombination (4) des r-Bits Codierwortes und eines von einem Benutzer (2) einzugebenden p-Bits Codierwortes gebildet wird.

13. Vorrichtung zur Verschlüsselung von n-Bits Datenwörtern, versehen mit einem Produktverschlüsselkreis (1), der als Eingangssignale aufeinanderfolgende n-Bits Wörter und einen m-Bits Schlüssel hat, eine Folge entsprechender verschlüsselter n-Bits Datenwörter erzeugt und mindestens einen Permutationskasten mit n Eingängen und n Ausgängen und mindestens einen Substitutionskasten mit n Eingängen und n Ausgängen hat, welche Permutations- und Substitutionskästen unter Steuerung des m-Bits Schlüssels stehen, wobei n und m vorbestimmte ganze Zahlen sind, und ein Modulo-2-Addierwerk (7), dessen erster Eingang zu verschlüsselnde n-Bits Datenwörter empfängt, dessen zweiter Eingang mit dem Ausgang (13) des Produktverschlüsselkreises (1) verbunden ist und die n-Bits verschlüsselten Datenwörter empfängt und dessen Ausgang mit einem Eingang des Produktverschlüsselkreises (1) verbunden ist und an diesen n-Bits Wörter abgibt, wobei das Addierwerk (7) jedes der von dem Produktverschlüsselkreis (1) erzeugten n-Bits verschlüsselten Datenwörter mit einem nächsten aufeinanderfolgenden der zu verschlüsselnden n-Bits Datenwörter logisch kombiniert, um ein entsprechendes der n-Bit Wörter zu liefern, dadurch gekennzeichnet, daß der Produktverschlüsselkreis (1) abwechselnd mit einem aus einer Anzahl Permutationskästen (1-1, ..., 1-11) mit n Eingängen und n Ausgängen und einem aus einer Anzahl Substitutionskästen (1-12, ..., 1-51) mit n Eingängen und n Ausgängen versehen ist, wobei jeder der Permutations- und Substitutionskästen unter Steuerung eines spezifischen Teils des m-Bits Schlüssels steht und jedes aufeinanderfolgende der n-Bits Wörter nur einmal von jedem jeweiligen der Permutations- und Substitutionskästen permutiert oder substituiert wird.

14. Vorrichtung nach Anspruch 13, versehen mit Schaltmitteln (11), um an vorbestimmten Zeitpunkten den zweiten Eingang des Modulo-2-Addierwerks (7) mit einem Kreis (4) zu verbinden, der ein n-Bits Anfangscodierwort (15) erzeugt.

15. Vorrichtung nach Anspruch 14, versehen mit Mitteln (4), um das n-Bits Anfangscodierwort (15) aus einem von einem mit der Vorrichtung verbundenen Computer erzeugten r-Bits Codierwort und einem von einem Benutzer (2) eingegebenen p-Bits Codierwort zu bilden.

16. Vorrichtung nach Anspruch 15, versehen mit einem zweiten Modulo-2-Addierwerk (5), wobei ein erster Eingang des zweiten Addierwerks-(5) das r-Bits Codierwort empfängt, ein zweiter Eingang des zweiten Addierwerks (5) einen r-Bits Teil des m-Bits Schlüssels empfängt und ein Ausgang des zweiten Addierwerks (5) mit einem Kreis (6) verbunden ist, um einen r-Bits Ausgang des zweiten Addierwerks (5) und verbleibende m-r-Bits des Schlüssels zu dem dem Produktverschlüsselkreis (1) zuzuführenden m-Bits Schlüssel zu kombinieren.

17. Vorrichtung zur Entschlüsselung von n-Bits verschlüsselten Datenwörtern, versehen mit einem Produktverschlüsselkreis (1), der als Eingangssignale aufeinanderfolgende n-Bits verschlüsselte Wörter und einen m-Bits Schlüssel hat, um eine Folge entsprechender entschlüsselter n-Bits Datenwörter zu erzeugen, und mindestens einen Permutationskasten mit n Eingängen und n Ausgängen und mindestens einen Substitutionskasten mit n Eingängen und n Ausgängen hat, welche Permutations- und Substitutionskästen unter Steuerung des m-Bits Schlüssels stehen, wobei n und m vorbestimmte ganze Zahlen sind, und einem Modulo-2-Addierwerk (8), dessen erster Eingang mit dem Ausgang des Produktverschlüsselkreises (1) verbunden ist und die entschlüsselten n-Bits Datenwörter empfängt, dessen zweiter Eingang mit dem Eingang des Produktverschlüsselkreises (1) verbunden ist und die zu entschlüsselnden verschlüsselten n-Bits Datenwörter empfängt, und wobei ein Ausgang des Addierwerks (8) die entschlüsselten n-Bits verschlüsselten Datenwörter abgibt, welches Addierwerk (8) jedes der von dem Produktverschlüsselkreis (1) erzeugten entschlüsselten n-Bits Wörter mit einem nächsten aufeinanderfolgenden der zu entschlüsselnden verschlüsselten n-Bits Datenwörter logisch kombiniert, um ein laufendes entsprechendes der entschlüsselten n-Bits Datenwörter zu liefern, dadurch gekennzeichnet, daß der Produktverschlüsselkreis (1) abwechselnd einen aus einer Anzahl Permutationskästen (1-1, ..., 1-11) mit n Eingängen und n Ausgängen und einen aus einer Anzahl Substitutionskästen (1-12, ..., 1-51) mit n Eingängen und n Ausgängen aufweist, wobei jeder der Permutations- und Substitutionskästen unter Steuerung eines spezifischen Teils des m-Bits Schlüssels steht und jedes aufeinanderfolgende der n-Bits verschlüsselten Wörter nur einmal von jedem jeweiligen der Permutations- und Substitutionskästen permutiert oder substituiert wird.

18. Vorrichtung nach Anspruch 17, versehen mit Schaltmitteln (12), um an vorbestimmten Zeitpunkten den zweiten Eingang des Modulo-2-Addierwerks (8) mit einem Kreis (4) zu verbinden, der ein n-Bits Anfangscodierwort (15) erzeugt.

19. Vorrichtung nach Anspruch 18, versehen mit Mitteln (4), um das n-Bits Anfangscodierwort aus einem von einem mit der Vorrichtung verbundenen Computer erzeugten r-Bits Codierwort und einem von einem Benutzer (2) eingegebenen p-Bits Codierwort zu bilden.

20. Vorrichtung nach Anspruch 19, versehen mit einem zweiten Modulo-2-Addierwerk (5), wobei ein erster Eingang des zweiten Addierwerks (5) das r-Bits Codierwort empfängt, ein zweiter Eingang des zweiten Addierwerks (5) einen r-Bits Teil des m-Bits Schlüssels empfängt und ein Ausgang des zweiten Addierwerks (5) mit einem Kreis (6) verbunden ist, um einen r-Bits Ausgang des zweiten Addierwerks (5) und verbleibende m-r-Bits des Schlüssels zu dem dem Produktverschlüsselkreis (1) zuzuführenden m-Bits Schlüssel zu kombinieren.

21. Computersystem, versehen mit:
einem zentralen Prozessor;
einer harten Scheibenspeichereinheit;
einem den zentralen Prozessor und die Scheibenspeichereinheit verbindenden Bus, dadurch gekennzeichnet, daß der Bus eine Vorrichtung nach einem der Ansprüche 13-20 enthält.

## Revendications

1. Une methode de cryptage de mots de donnees a n bits, comprenant les etapes consistant a: combiner logiquement (7) des mots consecutifs pris dans une pluralite de mots de donnees a n bits devant etre cryptes avec des mots consecutifs pris dans une pluralite de mots de codage a n bits de maniere a produire des mots resultants a n bits consecutifs; fournir des mots a n bits consecutifs a un circuit de chiffrement a produit (1) ; modifier une pluralite de fois, dans ledit circuit de chiffrement a produit (1) et sous le controle d'une cle a m bits, chacun desdits mots a n bits afin de produire un mot de donnees crypte correspondant, dans lequel n et m sont tous deux des nombres entiers predefinis; ladite etape de modification comprenant l'etape consistant a permuter et substituer successivement et alternativement chacun desdits mots a n bits sous le controle de ladite cle, caracterisee en ce que les mots a n bits sont fournis au circuit de chiffrement a produit (1) par un bus d'une largeur de n bits, et en ce que chacun desdits mots a n bits est modifie une pluralite de fois dans une pluralite correspondante d'etapes de modification consecutives dudit circuit de chiffrement a produit (1), chacun desdits mots a n bits etant modifie une seule fois par chacune desdites etapes de modification.

2. La methode selon la revendication 1, comprenant en outre l'etape consistant a deriver le mot de codage a n bits d'un mot crypte a n bits apparaissant a la sortie du circuit de diffrement (1).

3. La methode selon la revendication 2, dans laquelle le mot de codage a n bits est identique au mot crypte.

4. La methode selon la revendication 1, dans laquelle les mots de donnees cryptes a n bits sont stockes par secteurs dans un dispositif de stockage, et comprenant en outre l'etape consistant a former le mot de codage a n bits resultant a partir d'un mot de codage a r bits, le mot de codage a r bits etant genere pour chaque nouveau secteur devant etre ecrit et etant directement lie au secteur dans lequel doivent etre ecrits les mots de donnees a n bits resultants, qui doivent etre cryptes, ou r est un nombre entier predefini ayant une valeur inferieure ou egale a m.

5. La methode selon la revendication 4, comprenant en outre l'etape consistant a determiner le mot de codage a r bits en reponse a au moins l'un des parametres suivants: un numero d'une tete de lecture/ecriture dans une unite de disques comportant une pluralite de disques durs, une face d'un disque dans l'unite, un numero d'une piste sur la face, et un numero du secteur sur la piste.

6. La methode selon la revendication 5, comprenant en outre l'etape consistant a former le mot de codage a n bits par une combinaison logique (4) du mot de codage a r bits et d'un mot de codage a p bits, ledit mot de codage a p bits etant introduit par un utilisateur (2).

7. Une methode de decryptage de donnees cryptees comprenant les etapes consistant a: fournir des mots cryptes a n bits consecutifs a un circuit de chiffrement a produit (1); modifier, dans ledit circuit de chiffrement a produit et sous le controle d'une cle a m bits, chacun desdits mots cryptes a n bits une pluralite de fois afin de produire un mot de donnees decrypte correspondant dans une pluralite de mots de donnees decryptes, dans lequel n et m sont tous deux des nombres entiers predefinis; ladite etape de modification comprenant l'etape consistant a permuter et substituer successivement et alternativement chacun desdits mots cryptes a n bits sous le controle de ladite cle; et ladite methode comprenant en outre l'etape consistant a: combiner logiquement (8) des mots consecutifs pris dans les mots decryptes et des mots consecutifs pris dans une pluralite de mots de codage a n bits, de maniere a produire des mots consecutifs dans une pluralite de mots de donnees decryptes a n bits, caracterisee en ce que les mots cryptes a n bits sont fournis au circuit de chiffrement a produit (1) par un bus d'une largeur de n bits, et en ce que chacun desdits mots cryptes a n bits est modifie une pluralite de fois dans une pluralite correspondante d'etapes de modification consecutives dudit circuit de chiffrement a produit (1), chacun desdits mots cryptes a n bits etant modifie une seule fois par chacune desdites etapes de modification.

8. La methode selon la revendication 7, comprenant en outre l'etape consistant a deriver le mot de codage a n bits du mot de donnees crypte a n bits apparaissant a l'entree du circuit de diffrement (1).

9. La methode selon la revendication 8, dans laquelle le mot de codage a n bits est identique au mot de donnees crypte.

10. La methode selon la revendication 7, dans laquelle les mots de donnees cryptes a n bits sont stockes par secteurs dans un dispositif de stockage, et comprenant en outre l'etape consistant a former le mot de codage a n bits a partir d'un mot de codage a r bits, le mot de codage a r bits etant genere pour chaque nouveau secteur devant etre ecrit et etant directement lie au secteur dans lequel doivent etre lus les mots de donnees cryptes a n bits, qui doivent etre decryptes, ou r est un nombre entier predefini ayant une valeur inferieure ou egale a m.

11. La methode selon la revendication 10, comprenant en outre l'etape consistant a determiner le mot de codage a r bits en reponse a au moins l'un des parametres suivants: un numero d'une tete de lecture/ecriture dans une unite de disque comportant une pluralite de disques durs, une face d'un disque dans l'unite, un numero d'une piste sur la face, et un numero du secteur sur la piste.

12. La methode selon la revendication 11, comprenant en outre l'etape consistant a former le mot de codage a n bits par une combinaison logique (4) du mot de codage a r bits et d'un mot de codage a p bits, ledit mot de codage a p bits etant introduit par un utilisateur (2).

13. Appareil de cryptage de mots de donnees a n bits comprenant: un circuit de chiffrement a produit (1), ayant comme signaux d'entree des mots a n bits consecutifs et une cle a m bits, produisant une sequence de mots de donnees cryptes a n bits correspondants et comprenant au moins une boite de permutation a n entrees et n sorties ainsi qu'au moins une boite de substitution a n entrees et n sorties, lesdites boites de permutation et de substitution etant sous le controle de la cle a m bits, dans laquelle n et m sont des nombres entiers predefinis; et un additionneur a modulo 2 (7), dont une premiere entree recoit des mots de donnees a n bits devant etre cryptes, et dont une seconde entree est reliee a la sortie (13) du circuit de chiffrement a produit (1) et recoit les mots de donnees cryptes a n bits, et la sortie de l'additionneur (7) etant reliee a une entree du circuit de chiffrement a produit (1) et lui fournissant lesdits mots a n bits, dans lequel l'additionneur (7) combine logiquement chacun des mots de donnees cryptes a n bits produits par ledit circuit de chiffrement a produit (1) a l'un prochain desdits mots de donnees a n bits devant etre cryptes afin de produire l'un correspondant des mots a n bits, caracterise en ce que le circuit de chiffrement a produit (1) comprend alternativement l'une parmi une pluralite de boites de permutation (1-1, ..., 1-11) a n entrees et n sorties et l'une parmi une pluralite de boites de substitution (1-12, ..., 1-51) a n entrees et n sorties, chacune desdites boites de permutation et de substitution etant sous le controle d'une partie specifique de la cle a m bits et chaque mot consecutif des mots a n bits etant permute ou substitue une seule fois par chaque boite respective desdites boites de permutation et de substitution.

14. L'appareil de la revendication 13, comprenant en outre des moyens de commutation (11) destines a relier, a des points dans le temps predetermines, la seconde entree de l'additionneur a modulo 2 (7) a un circuit (4) qui genere un mot de codage initial a n bits (15).

15. L'appareil de la revendication 14, comprenant en outre des moyens (4) de formation du mot de codage initial a n bits (15) a partir d'un mot de codage a r bits genere par un ordinateur relie a l'appareil et d'un mot de codage a p bits introduit par un utilisateur (2).

16. L'appareil de la revendication 15, comprenant en outre un second additionneur a modulo 2 (5), dans lequel une premiere entree dudit second additionneur (5) recoit le mot de codage a r bits, une seconde entree dudit second additionneur (5) recoit une portion a r bits de la cle a m bits, et une sortie dudit second additionneur (5) est reliee a un circuit (6) destine a combiner une sortie a r bits du second additionneur (5) et les m-r bits restants de la cle pour former la cle a m bits devant etre fournie au circuit de chiffrement a produit (1).

17. Appareil de decryptage de mots de donnees cryptes a n bits comprenant: un circuit de chiffrement a produit (1), ayant comme signaux d'entree des mots a n bits cryptes consecutifs et une cle a m bits, destine a produire une sequence de mots de donnees a n bits decryptes correspondants et comprenant au moins une boite de permutation a n entrees et n sorties ainsi qu'au moins une boAIte de substitution a n entrees et n sorties, lesdites boites de permutation et de substitution etant sous le controle de la cle a m bits, dans laquelle n et m sont des nombres entiers predefinis; et un additionneur a modulo 2 (8), dont une premiere entree est reliee a la sortie du circuit de chiffrement a produit (1) et recoit les mots de donnees a n bits decryptes, dont une seconde entree est reliee a une entree du circuit de chiffrement a produit (1) et recoit les mots de donnees cryptes a n bits devant etre decryptes, et une sortie de l'additionneur (8) fournissant les mots de donnees cryptes a n bits decryptes, dans lequel l'additionneur (8) combine logiquement chacun des mots a n bits decryptes produits par ledit circuit de chiffrement a produit (1) a l'un prochain desdits mots de donnees a n bits cryptes devant etre decryptes afin de produire un correspondant courant des mots de donnees a n bits decryptes, caracterise en ce que le circuit de chiffrement a produit (1) comprend alternativement l'une parmi une pluralite de boites de permutation (1-1, ..., 1-11) a n entrees et n sorties et l'une parmi une pluralite de bolAtes de substitution (1-12, ..., 1-51) a n entrees et n sorties, chacune desdites boites de permutation et de substitution etant sous le controle d'une partie specifique de la cle a m bits et chaque mot consecutif des mots a n bits cryptes etant permute ou substitue une seule fois par chaque boite respective desdites boites de permutation et de substitution.

18. L'appareil de la revendication 17, comprenant en outre des moyens de commutation (12) destines a relier, a des moments predetermines, la seconde entree de l'additionneur a modulo 2 (8) a un circuit (4) qui genere un mot de codage initial a n bits (15).

19. L'appareil de la revendication 18, comprenant en outre des moyens (4) de formation du mot de codage initial a n bits a partir d'un mot de codage a r bits genere par un ordinateur relie a l'appareil et d'un mot de codage a p bits introduit par un utilisateur (2).

20. L'appareil de la revendication 19, comprenant en outre un second additionneur a modulo 2 (5), dans lequel une premiere entree dudit second additionneur (5) recoit le mot de codage a r bits, une seconde entree dudit second additionneur (5) recoit une portion a r bits de la cle a m bits, et une sortie dudit second additionneur (5) est reliee a un circuit (6) destine a combiner une sortie a r bits du second additionneur (5) et les m-r bits restants de la cle pour former la cle a m bits devant etre fournie au circuit de chiffrement a produit (1).

21. Un systeme d'ordinateur comprenant: un processeur central; une unite de stockage a disque dur; un bus reliant le processeur central et l'unite de stockage a disque, caracterise en ce que le bus comprend un appareil selon chacune des revendications 13-20.
